# EUROPEAN PATENT SPECIFICATION

(11) **EP 1 836 428 B1**
(45) Date of publication and mention of the grant of the patent: **22.04.2009**
(21) Application number: 05821793.6
(22) Date of filing: 15.12.2005
(51) Int. Cl.: F16L 23/036, F16L 37/18

(54) **DEVICE FOR THE COUPLING AND RELEASE OF A PIPE FITTING TO A FLANGED PIPE**
VORRICHTUNG ZUM VERBINDEN UND LÖSEN EINES ROHRVERBINDUNGSSTÜCKS MIT BZW. VON EINEM FLANSCHROHR
DISPOSITIF POUR LE COUPLAGE ET LA DESOLIDARISATION D'UN RACCORD DE TUYAU SUR UN TUYAU A BRIDES

(30) Priority: 24.12.2004 IT MI20042506
(43) Date of publication of application: 26.09.2007
(73) Proprietor: Bormioli, Lorenzo, 35100 Padova (IT)
(72) Inventor: Bormioli, Lorenzo, 35100 Padova (IT)
(74) Representative: Mittler, Enrico
(86) International application number: PCT/EP2005/056834
(87) International publication number: WO 2006/067084

(56) References cited:
- EP-A- 0 276 033
- WO-A-20/04076906
- FR-A- 2 040 238
- GB-A- 842 542
- US-A- 3 830 533

## Description

The present invention concerns a device for the coupling and release of a pipe fitting to a flanged pipe.

By the term "fitting" it is herein meant a connector for flanges capable to connect easily and to disconnect in a safe and quick way the same flanges, both in normal conditions and in emergency conditions.

There are known pipe fittings that are utilised to connect to each other in quickly separable way pipes destined to the transport of oil products, in particular from a ship to land and vice-versa or from an extraction platform to a ship or from ship to ship or from ship or platform to extraction wells at sea bottom and so on.

Such fittings are usually coupled in a permanent way to a pipe, whereas it is necessary to connect them each time to the other pipe, by hooking its end flange. The two pipes are usually on stations in motion with reference to one another, in particular one on the land and the other one on a ship, or between ship and ship.

Coupling devices usable to provide in safe and quick way the coupling of a fitting to a flanged pipe are already known. One of these is described for example in WO-A-2004/076906 and it comprises a circumferential sequence of clamping wheels with round shape with cut along a circle cord, which project axially from a connection plate and are made rotate between two positions, in one of which all the cuts are turned toward the axis of the plate in such a way to allow the flange of the pipe to get near to the plate and in the other one of which helicoidal necks of the wheels lock the same flange against the plate.

It has been possible to observe that such known device is not suitable for the connection in case of utilisation with pipes destined to the transport of products at cryogenic temperatures. In particular the thermal contractions due to the temperature, together with the vibrations caused by the fluid in motion, can cause a decrease in the clamping force provided by the wheels.

Object of the present invention has been to provide a device of the aforesaid type which allows a safe and long-lasting coupling even in the case of transport of products at very low temperature.

According to the invention such object has been attained with a device for the quick coupling of a pipe fitting to a flanged pipe, comprising a connection plate rigidly fastened to one end of the fitting so as to be axially approachable to the front of a terminal flange of the flanged pipe, clamping wheels revolving around their own axis and frontally projecting from said plate in circumferentially distanced positions, each clamping wheel having a round shape with a cut along a cord of circle in order to allow in an angular position with cord turned toward the axis of the coupling and to prevent in all the other angular positions the passage of the flange of the flanged pipe between said wheels for the mutual moving near and moving apart of the plate and the flange, each clamping wheel having in addition toward said plate a helicoidal neck capable to cause as a result of the rotation of the wheel from said angular position to said other angular positions the front abutment engagement and the clamping of said flange against said plate, characterised in that each wheel is controlled by a pinion-endless screw unit supported by a block integral with the plate and connectable with external control means.

It has been possible to verify that the pinion-endless screw unit guarantees a better and long-lasting holding of the wheels in clamping position even in the case of very low temperatures.

In fact the pinion-endless screw system guarantees a reversible movement driven by the endless screw to the pinion, therefore allowing the closing and the opening of the equipment, but not a movement driven by the pinion to the endless screw. In other words the endless screw can drive the gear connected with the wheel, but the wheel, once having reached the position controlled by the endless screw, must remain in said position until the endless screw is set in operation. This guarantees the safety against undesired operations caused by thermal reduction and vibrations, and therefore it guarantees the perfect and long-lasting coupling of the flanged pipe.

In addition, since for each wheel a respective pinion-endless screw unit is provided, the bad operation of one of them, though reducing the performances in terms of external loads and pressure, does not compromise the tightness of the coupling.

The characteristics of the present invention will be made more evident by the hollowing detailed description of an embodiment thereof which is illustrated as a non-limiting example in the enclosed drawings, in which:
Figure 1 shows an axonometric view of a coupling/release device according to the present invention;
Figure 2 shows a top plan view of the device;
Figure 3 shows a view in section according to the line III-III in Figure 2;
Figure 4 shows the magnified detail of the pinion-endless screw unit in Figure 3;
Figure 5 shows a left-hand partial view of the detail in Figure 4;
Figure 6 shows a bottom view of Figure 4.

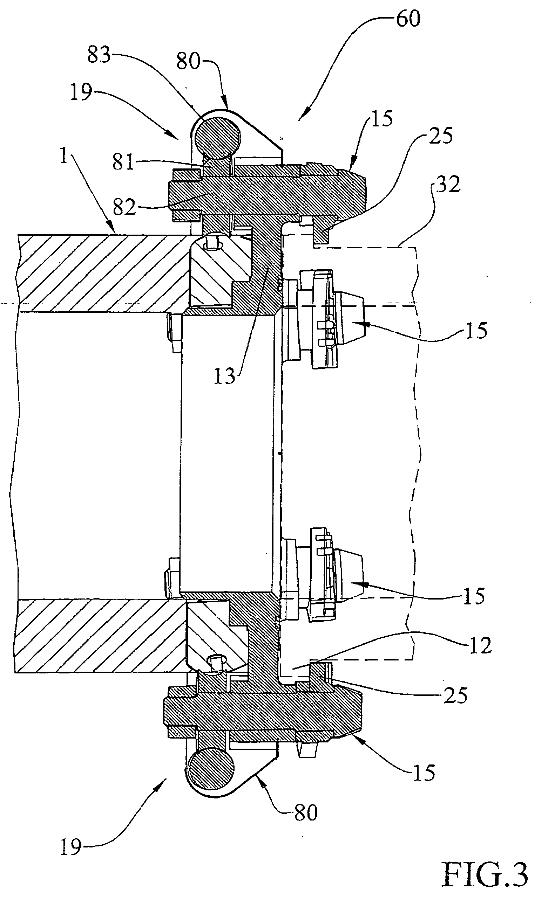

As shown in Figure 3, one end 1 of a fitting is destined to be coupled, when required, to a flange 12 of a second pipe 32 (traced with a dotted line in Figure 3).

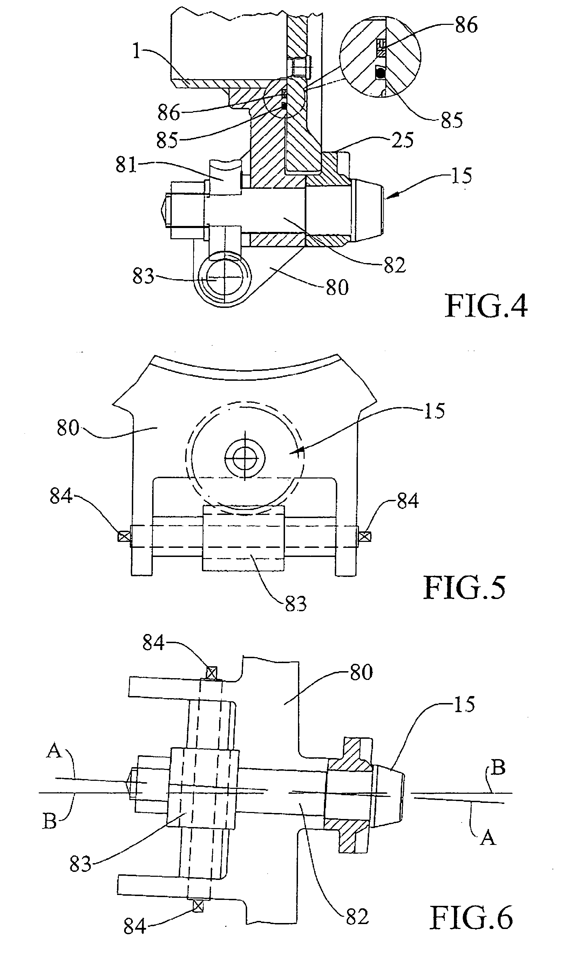

To such purpose, the fitting end 1 bears a coupling device 60, which comprises a plate 13 which revolvingly supports six clamping wheels 15, which project axially from the front of the plate 13 in circumferentially distanced positions, with axes A slightly inclined as compared with the respective perpendiculars B to the plate 13, as shown in Figure 6.

Each wheel 15 is controlled by a pinion-endless screw unit 19 supported by a hollow block 80 integral with the plate 13, comprising a pinion 81, fastened onto the stem 82 of the wheel 15, which engages with an endless screw 83 with axis orthogonal to the one of the wheel 15.

Said endless screw 83 is revolvingly supported by the block 80 (Figures 5-6) and it has two squared pins 84 at its ends turned toward the outside, which are couplable by external control means not shown in the Figures.

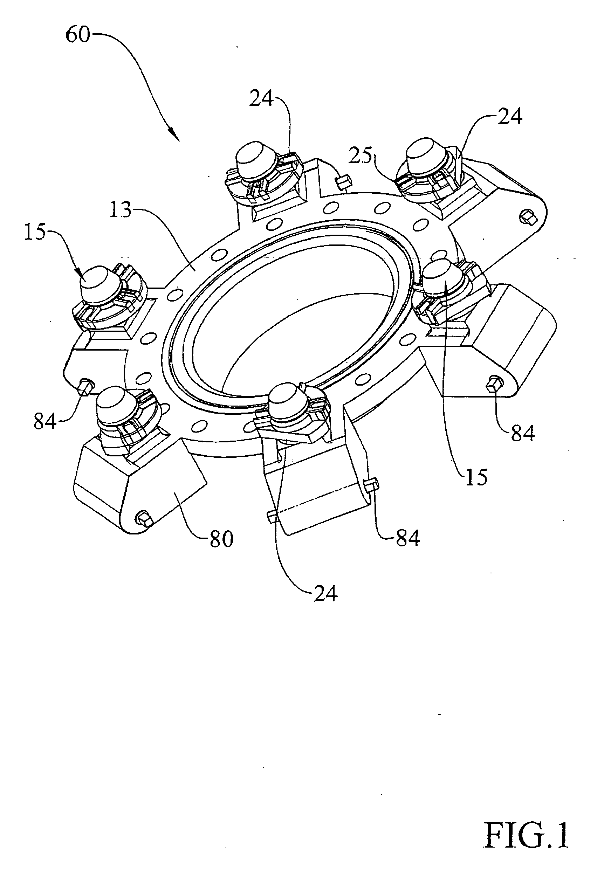

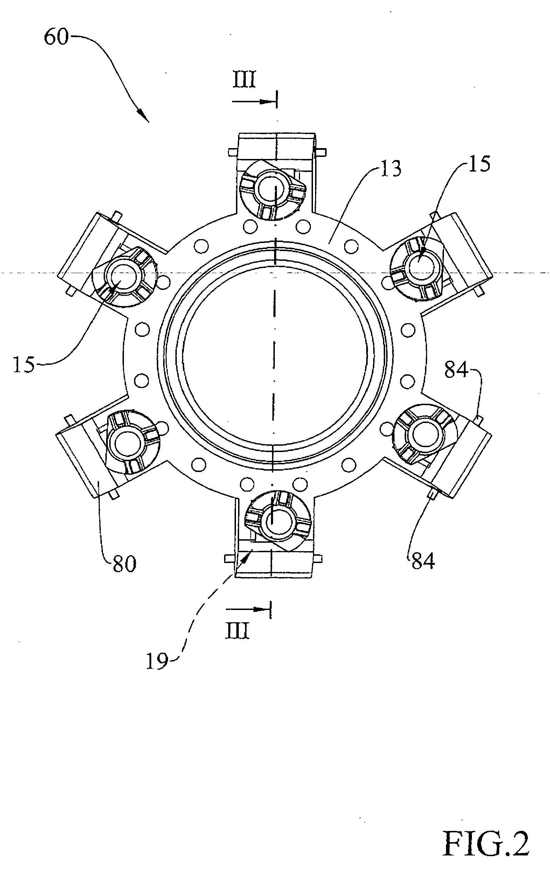

As shown in Figure 3, each clamping wheel 15 has a front round conformation with a cut 24 along a cord of circle. The cut 24 is made in such a way that, when the wheels get in the angular position with all the cuts 24 turned toward the axis of the coupling, the terminal flange 12 of the second pipe can pass between the wheels 15 so as to frontally get near to the plate 13 and to get away from it. When the wheels 15 are instead in any other angular position (Figures 1 and 2), this is not possible.

As it is well shown in Figure 3, each clamping wheel 15 has a helicoidal neck 25 capable to cause the front abutment engagement and the clamping of the flange 12 against the plate 13.

The fitting end 1 is finally provided with round grooves 90 suitable to house a traditional packing 85 with compressed fibres and a U-shaped "energised" packing 86.

The way in which the quick-coupling device 60 works is soon explained.

While the pinion-endless screw unit 19 maintains the clamping wheels 15 in an angular position suitable for coupling, with cuts 24 turned toward the fitting axis, the flange 12 of the pipe to be coupled must be brought near to the plate 13 going beyond the cuts 24 of the wheels 15, and this also in presence of relative movements of the coupling and the pipe to be coupled.

When the flange 12 has reached the plate 13, the endless screws 83 are driven by external means through the pins 84 in such a way as to induce the rotation of the pinions 81 and therefore of the wheels 15 toward the angular position of Figure 3.

Due to the effect of such rotation the helixes 25 of the wheels 15 engage with the flange 12 in such a way as to force the flange 12 to rest on the plate 13 and to firmly clamp against it (Figure 3).

The gear relationship between the endless screw 83 and the pinions 81 allows to establish a safe and stable coupling, both in case of vibration and in case of transport of fluids at very low temperature.

The packing 85 works at regimen temperatures and it allows to compensate the possible irregularities of the flange 12, whereas the U-shaped packing 86 guarantees the tightness in case of considerable thermal changes.

The plane engagement, perpendicular to the axis of the fitting, that is thus obtained between the terminal portions of the helicoids 25 and the back of the flange 12, prevents the stresses exerted to the flange 12 from determining reverse rotations of the wheels 15 and the consequent loosening of the clamping engagement between the flange 12 and the plate 13.

In a simple, safe and quick way the stable and long-lasting coupling of the fitting to the flange 12 and relative pipe is therefore obtained.

The mechanisms with pinion-endless screw unit 19 being used guarantee safety performances certainly higher than the known hydraulic cylinder mechanisms.

## Claims

1. Device for the quick coupling of a pipe fitting to a flanged pipe, comprising a connection plate (13) rigidly fastened to one end (1) of the fitting so as to be axially approachable to the front of a terminal flange (12) of the flanged pipe, clamping wheels (15) revolving around their own axis and projecting frontally from said plate (13) in circumferentially distanced positions, each clamping wheel (15) having round shape with a cut (24) along one cord of circle in order to allow in an angular position with cord turned toward the axis of the coupling, and to prevent in all the other angular positions, the passage of the flange (12) of the flanged pipe between said wheels (15) for the mutual moving near and moving apart of the plate (13) and of the flange (12), each clamping wheel (15) having in addition toward said plate (13) a helicoidal neck (25) capable to cause as a result of the rotation of the wheel (15) from said angular position to said other angular positions the front abutment engagement and the clamping of said flange (12) against said plate (13), **characterised in that** each wheel (15) is controlled by a pinion-endless screw unit (19) supported by a block (80) integral with the plate (13) and connectable with external control means.

2. Device according to claim 1, **characterised in that** said each pinion-endless screw unit (19) comprises a pinion (81) fastened onto a stem (82) of the wheel (15) and engaged with an endless screw (83) with axis orthogonal to said stem (82) whose ends are supported by the blocks (80) and provided with pins (84) turned toward the outside couplable by means for controlling the rotation of said endless screw (83) and therefore of the wheel (15).

3. Device according to claim 1, **characterised in that** the plate (13), on the contact surface to the terminal flange (12), is provided with a packing (85) with compressed fibres that is suitable to compensate the irregularities of said flange (12).

4. Device according to claim 3, **characterised in that** said contact surface is provided with an additional energised U-shaped packing (86) suitable to compensate possible thermal changes.

## Patentansprüche

1. Vorrichtung zum schnellen Koppeln eines Rohrverbindungsstücks mit einem Flanschrohr, die eine Verbindungsplatte (13) aufweist, die an einem Ende (1) des Verbindungsstücks starr befestigt ist, um zur Vorderseite eines Anschlussflansches (12) des Flanschrohrs axial zugänglich zu sein, Spannräder (15), die sich um ihre eigene Achse drehen und bei umfangsmäßig beabstandeten Positionen stirnseitig von der Platte (13) vorstehen, wobei jedes Spannrad (15) eine runde Form mit einem Ausschnitt (24) entlang einem Kreissegment hat, um in einer Winkelposition mit dem Kreissegment in Richtung zu der Kopplungsachse gedreht den Durchtritt des Flansches (12) des Flanschrohrs zwischen den Rädern (15) für das wechselseitige Bewegen nahe und das Bewegen abseits der Platte (13) und des Flansches (12) zuzulassen und in allen anderen Winkelpositionen zu verhindern, wobei jedes Spannrad (15) in Richtung zu der Platte (13) zusätzlich einen Helikoid-Ansatz (25) hat, der als Ergebnis der Drehung des Rads (15) von der Winkelposition zu den anderen Winkelpositionen den Vorderseiten-Angrenzungseingriff und das Einspannen des Flansches (12) gegenüber der Platte (13) veranlassen kann, **dadurch gekennzeichnet, dass** jedes Rad (15) durch eine Ritzel/Endlosschraubeneinheit (19) gesteuert wird, die durch einen Block (80) gelagert ist, der mit der Platte (13) integral und mit einer externen Steuereinrichtung verbindbar ist.

2. Vorrichtung nach Anspruch 1, **dadurch gekennzeichnet, dass** jede Ritzel/Endlosschraubeneinheit (19) ein Ritzel (81) aufweist, das an einem Schaft (82) des Rads (15) befestigt ist und in Eingriff mit einer Endlosschraube (83) mit einer Achse orthogonal zu dem Schaft (82) steht, dessen Enden durch die Blöcke (80) gelagert sind und mit in Richtung zur Außenseite gedrehten Stiften (84) versehen sind, die durch eine Einrichtung zum Steuern der Drehung des Endlosschraube (83) und daher des Rads (15) koppelbar sind.

3. Vorrichtung nach Anspruch 1, **dadurch gekennzeichnet, dass** die Platte (13) an der Kontaktfläche zu dem Anschlussflansch (12) mit einer Abdichtung (85) mit komprimierten Fasern versehen ist, die zum Kompensieren der Unregelmäßigkeiten des Flansches (12) geeignet ist.

4. Vorrichtung nach Anspruch 3, **dadurch gekennzeichnet, dass** die Kontaktfläche mit einer zusätzlichen erregten U-förmigen Abdichtung (86) versehen ist, die zum Kompensieren möglicher thermischer Änderungen geeignet ist.

## Revendications

1. Dispositif pour le montage rapide d'un raccord de tuyauterie sur un tuyau à bride, comprenant une plaque d'assemblage (13) solidaire d'une extrémité (1) du raccord de manière à pouvoir être approchée axialement de l'avant d'une bride terminale (12) du tuyau à bride, des galets de serrage (15) tournant autour de leur propre axe et faisant saillie frontalement depuis ladite plaque (13) à des emplacements espacés dans la direction circonférentielle, chaque galet de serrage (15) ayant une forme ronde avec un pan coupé (24) suivant une corde de cercle afin de permettre, dans une position angulaire, que la corde soit orientée vers l'axe du montage, et d'empêcher, dans toutes les autres positions angulaires, la passage de la bride (12) du tuyau à bride entre lesdits galets (15) pour le rapprochement et l'éloignement mutuel de la plaque (13) et de la bride (12), chaque galet de serrage (15) ayant en outre, vers ladite plaque (13), un resserrement hélicoïdal (25) apte à provoquer, par suite de la rotation du galet (15) de ladite position angulaire auxdites autres positions angulaires, la venue en butée frontale et le serrage de ladite bride (12) contre ladite plaque (13), **caractérisé en ce que** chaque galet (15) est commandé par un dispositif à pignon et vis sans fin (19) supporté par un bloc (80) faisant corps avec la plaque (13) et pouvant coopérer avec une moyen de commande extérieur.

2. Dispositif selon la revendication 1, **caractérisé en ce que** chaque dit dispositif à pignon et vis sans fin (19) comporte un pignon (81) fixé sur une tige (82) du galet (15) et en prise avec une vis sans fin (83) à axe perpendiculaire à ladite tige (82) dont les extrémités sont supportées par le bloc (80) et pourvues de broches (84) orientées vers l'extérieur, pouvant être accouplée avec un moyen pour commander la rotation de ladite vis sans fin (83) et donc de la roue (15).

3. Dispositif selon la revendication 1, **caractérisé en ce que** la plaque (13), sur la surface de contact avec la bride terminale (12), est munie d'une garniture (85) à fibres comprimées qui convient pour compenser les irrégularités de ladite bride (12).

4. Dispositif selon la revendication 3, **caractérisé en ce que** ladite surface de contact est pourvu d'une garniture supplémentaire en U énergisée, permettant de compenser d'éventuels changements thermiques.
